# EUROPEAN PATENT SPECIFICATION

(11) **EP 4 445 523 B1**
(45) Date of publication and mention of the grant of the patent: **04.02.2026**
(21) Application number: 22830318.6
(22) Date of filing: 08.12.2022
(51) Int. Cl.: H04B 10/70, G01B 9/02003, G02B 6/24

(54) **METHOD AND SYSTEM FOR MATCHING FREQUENCIES OF LASERS IN A QUANTUM COMMUNICATION SYSTEM**
VERFAHREN UND SYSTEM ZUR FREQUENZANPASSUNG VON LASERN IN EINEM QUANTENKOMMUNIKATIONSSYSTEM
PROCÉDÉ ET SYSTÈME D'ADAPTATION DES FRÉQUENCES DES LASERS DANS UN SYSTÈME DE COMMUNICATION QUANTIQUE

(30) Priority: 08.12.2021 NL 2030077
(43) Date of publication of application: 16.10.2024
(73) Proprietor: Q*Bird B.V., 2628 XJ Delft (NL)
(72) Inventor: SLATER, Joshua Alexander, 2600 AA Delft (NL); MIDDELBURG, Thomas, 2600 AA Delft (NL); BERREVOETS, Remon Ciaran, 2600 AA Delft (NL)
(74) Representative: De Vries & Metman
(86) International application number: PCT/NL2022/050710
(87) International publication number: WO 2023/106923

(56) References cited:
- CN-A- 108 196 412
- CN-A- 112 039 666
- CN-A- 113 507 365
- CN-A- 113 556 172
- US-B1- 11 193 750
- RAJU VALIVARTHI ET AL: "Measurement-device-independent quantum key distribution: from idea towards application", ARXIV.ORG, CORNELL UNIVERSITY LIBRARY, 201 OLIN LIBRARY CORNELL UNIVERSITY ITHACA, NY 14853, 29 January 2015 (2015-01-29), XP080786264, DOI: 10.1080/09500340.2015.1021725
- CHEN XING ET AL: "A High-Precision Offset Frequency Locking Technique With Delay Line Reference and AOM-Based Compensation", IEEE PHOTONICS JOURNAL, IEEE, USA, vol. 13, no. 4, 10 August 2021 (2021-08-10), pages 1 - 6, XP011874196, DOI: 10.1109/JPHOT.2021.3103659

## Description

### Field of the invention

The present disclosure relates to a method and system for matching frequencies of lasers in a quantum communication system, a quantum communication network comprising such a system, and a computer program configured to execute the method.

### Background of the invention

Quantum information systems are data processing systems that use a quantum system, e.g. a qubit, as an information carrier. In conventional data processing systems the basic unit of information are bits that either have the value '0' or '1'. In contrast, the basic unit of information in quantum information systems are qubits, wherein a qubit may be a two-state quantum mechanical system. The special property of a qubit is that it can be in either '0', '1', or a superposition of both states simultaneously. One example of a quantum information system wherein qubits are used is a QKD system.

QKD systems allow two or more users at different locations to securely generate cryptographic keys by at least partly making use of the special property of the qubits. The first proposal for a QKD system (BB84) was done by C.H. Benett and G. Brassard, described in the article "Quantum cryptography: Public key distribution and coin tossing", Proceedings of IEEE International Conference on Computers, Systems and Signal Processing, volume 175, page 8. New York, 1984. An advantage of using a QKD system is that, at least in theory, the key is even secure in case an eavesdropper is present in the system.

One proposal for QKD is the measurement device independent quantum key distribution (MDI-QKD) protocol. In this protocol, two users, Alice and Bob, send random qubits to a third party, normally referred to as Charlie. Charlie then performs a Bell state measurement (BSM) that projects the state of the two qubits received at Charlie (one from Alice and one from Bob) onto an entangled Bell states. Every time a Bell state is produced, Alice and Bob can compare on a public channel their preparation bases and keep the record of events for which they have picked the same basis. After this comparison on the public channel, Bob post-process his bit values such that they become identical to Alice's. These Bell state measurements are fundamental to many quantum communication applications, with MDI-QKD as one important example.

For the Bell state measurement in an MDI-QKD system to work, it is necessary to generate two indistinguishable photons from two independent laser sources (Alice and Bob) to do a successful BSM. An example of a Bell state measurement in an MDI-QKD system is described in the article by R. Valivarthi et al, "A cost-effective measurement-device-independent quantum key distribution system for quantum networks", Quantum Science and Technology, 2, 2017.

Often QKD systems are based on lasers and field programmable gate arrays to generate time-bin qubits. Time bin qubits may be formed by a coherent superposition of two independent temporal modes of a single-photon excitation. Time-bin encoding is especially suitable for single-mode optical fibre propagation and compatible with already existing fibre networks. Hence, the formation of time bin qubits in QKD systems is a practical element in the development of practical QDK implementations. QKD protocols such as the above referred BB84 and MDI-QKD protocols, the coherent one-way (COW) QKD protocol and other QKD protocols such as described in the article by Vagniluca et al, Efficient time-bin encoding for practical high-dimensional quantum key distribution, physical review applied 14, 014051 (2020), use a train of phase coherent temporal modes by intensity modulation of the output of a continuous-wave (CW) laser and subsequent attenuation.

CN 112 039 666 A relates to a frequency locking and phase stabilizing method and system based on quantum key distribution, and the system comprises a frequency locking system comprising an ultrastable laser used for outputting two independent laser sources; a beat frequency module used for acquiring beat frequency signals of the two independent laser sources; a spectrum analyzer used for measuring thefrequency difference between the two independent laser sources according to the beat frequency signal; a locking and tuning module connected with a frequency standard instrument; and the frequency standard instrument used for providing a peripheral frequency standard for the locking and tuning module. The locking and tuning module is used for tuning the frequency between the two independent lasersources to be consistent according to the frequency difference based on the frequency standard, and removing the inherent linear drift amount in the output frequency of the ultra-stable laser. According to the invention, the frequency locking between the two independent laser sources is realized in the quantum key distribution process, so that the phases of the reference optical signals and the quantum optical signals of the two independent laser sources are stable. Further examples of methods for matching laser frequencies in a quantum communication system, according to the state of the art, are known from RAJU VALIVARTHI ET AL: "Measurement-device-independent quantum key distribution: from idea towards application", and CN 113 507 365 A.

The requirement of a correctly-implemented Bell state measurement requires that the frequency difference between the frequencies of the light fields that Alice and Bob use to produce time bin qubits should be minimal. Therefore, it is desired to determine the frequency difference and to try to match the frequencies of Alice and Bob based on the determined frequency difference. Furthermore, the matching of the frequencies should be done in an efficient manner.

### Summary of the disclosure

In a first aspect, the disclosure relates to a method for matching frequencies of lasers in a quantum communication system. The system may comprise sending a first laser signal with a first frequency from a first device at a first location and sending a second laser signal with a second device at a second location to a beam splitter located at a third location such that the two lasers signals interfere at the beam splitter to obtain a beat signal that has a beat frequency, wherein the beat frequency corresponds to the frequency difference between the first and second frequency, measuring the beat frequency of the beat signal by a frequency detection unit that is positioned at the third location, determining if the beat frequency is in a predetermined frequency range, and sending a feedback signal from the third location to at least one of the first or second device, adapting the first or second frequency by sending the feedback signal to at least one of the first or second device, wherein adapting the frequency is executed according to a first algorithm as long as the beat frequency is outside the predetermined frequency range, wherein the first algorithm is configured to bring the beat frequency in the predetermined frequency range, and a second algorithm if the beat frequency is in the predetermined frequency to match the frequencies of the first and second laser signal.

In an embodiment executing the first algorithm comprises keeping the first frequency of the first laser signal constant, changing the second frequency of the second laser signal by sending the feedback signal to the second device, measuring the beat frequency of the beat signal based on the first frequency and the changed second frequency, and repeating the changing of the changed second frequency of the second laser signal if the beat frequency is outside the predetermined frequency range.

In an embodiment changing the second frequency of the second laser signal comprises changing the second frequency in a step-like manner, wherein in a first frequency step a change of the frequency is based on the predetermined frequency range of the frequency detection unit, and wherein for each subsequent frequency step the change of the frequency is increased and a sign of the frequency step is flipped.

In an embodiment the increasing of the change of the frequency in each subsequent frequency step comprises an addition of the change of the frequency of the first frequency step.

In an embodiment the first algorithm further comprises measuring, after each frequency step, the beat frequency of the beat signal, determining if the beat frequency is in the predetermined frequency range, performing, if the beat frequency is in the predetermined frequency range, at least one further frequency step, wherein the at least one further frequency step comprises a change of the frequency that is smaller than the change of the frequency of the first frequency step and wherein the sign of the last frequency step is equal to the preceding frequency step, and repeating, if the beat frequency is outside the predetermined frequency range, the changing of the second frequency of the second laser signal.

In an embodiment the change of the frequency of the at least one further frequency step is half of the change of the frequency of the first frequency step.

In an embodiment the second algorithm comprises keeping the first frequency of the first laser signal constant, determining a gradient of the beat frequency at least partly based on the second frequency and the changed second frequency, changing the second frequency of the second laser signal in the direction of the gradient of the beat frequency, measuring the beat frequency of the beating signal, waiting, if the beat frequency is below a predetermined threshold, for a predetermined time with determining if the beat frequency is in a predetermined frequency range, and repeating, if the beat frequency is above the predetermined threshold, the changing of the second frequency of the second laser signal.

In an embodiment wherein the second algorithm comprises putting a lower bound on the change of the second frequency for preventing an undetectable frequency difference, and putting an upper bound on the change of the second frequency for preventing that the beat signal moves outside of the predetermined frequency range of the frequency detection unit.

In an embodiment when during execution of the first algorithm the changing of the second frequency moves the second frequency outside a valid frequency range of the second laser signal, the first algorithm is performed with the second frequency being kept constant and the first frequency being changed.

In an embodiment the steps of changing the frequency of the second laser are executed by changing a voltage supplied to a laser signal frequency control unit, for example a temperature controller, that is configured to control the frequency of the laser signal output by the second laser.

In a further aspect the disclosure relates to a system for matching frequencies of lasers in a quantum communication system, comprising a first laser unit for emitting a first laser signal with a first frequency that is located at a first location, a second laser unit for emitting a second laser signal with a second frequency that is located at a second location, a beam splitter that is located at a third location, wherein the first and second laser signals are configured to interfere on the beam splitter to obtain a beat signal with a beat frequency, and a frequency detection unit for measuring the beat frequency of the beat signal, wherein the frequency detection unit is located at a third location and comprises a processor that is configured to determine if the beat frequency is in a predetermined frequency range, send a feedback signal to at least one of the first or second laser unit, adapting the first or second frequency by sending the feedback signal to at least one of the first or second device, wherein adapting the frequency is executed according to, a first algorithm as long as the beat frequency is outside the predetermined frequency range, wherein the first algorithm is configured to bring the beat frequency in the predetermined frequency range, and a second algorithm if the beat frequency is in the predetermined frequency range to match the frequencies of the first and second laser signal.

In an embodiment executing the first algorithm comprises keeping the first frequency of the first laser signal constant, changing the second frequency of the second laser signal by sending the feedback signal to the second laser unit, measuring the beat frequency of the beat signal based on the first frequency and the changed second frequency, and repeating the changing of the changed second frequency of the second laser signal if the beat frequency is outside the predetermined frequency range.

In an embodiment changing the second frequency of the second laser signal comprises changing the second frequency in a step-like manner, wherein in a first frequency step a change of the frequency is based on the predetermined frequency range of the frequency detection unit, and wherein for each subsequent frequency step the change of the frequency is increased and a sign of the frequency step is flipped.

In an embodiment the increasing of the change of the frequency in each subsequent frequency step comprises an addition of the change of the frequency of the first frequency step.

In an embodiment the first algorithm further comprises measuring, after each frequency step, the beat frequency of the beat signal, determining if the beat frequency is in the predetermined frequency range, performing, if the beat frequency is in the predetermined frequency range, at least one further frequency step, wherein the at least one further frequency step comprises a change of the frequency that is smaller than the change of the frequency of the first frequency step and wherein the sign of the last frequency step is equal to the preceding frequency step, and repeating, if the beat frequency is outside the predetermined frequency range, the changing of the second frequency of the second laser signal.

In an embodiment the change of the frequency of the at least one further frequency step is half of the change of the frequency of the first frequency step.

In an embodiment the second algorithm comprises keeping the first frequency of the first laser signal constant, determining a gradient of the beat frequency at least partly based on the second frequency and the changed second frequency, changing the second frequency of the second laser signal in the direction of the gradient of the beat frequency, measuring the beat frequency of the beating signal, waiting, if the beat frequency is below a predetermined threshold, for a predetermined time with determining if the beat frequency is in a predetermined frequency range, and repeating, if the beat frequency is above the predetermined threshold, the changing of the second frequency of the second laser signal.

In an embodiment wherein the second algorithm comprises putting a lower bound on the change of the second frequency for preventing an undetectable frequency difference, and putting an upper bound on the change of the second frequency for preventing that the beat signal moves outside of the predetermined frequency range of the frequency detection unit.

In an embodiment when during execution of the first algorithm the changing of the second frequency moves the second frequency outside a valid frequency range of the second laser signal, the first algorithm is performed with the second frequency being kept constant and the first frequency being changed.

In an embodiment the system further comprises a first and second frequency control unit, for example temperature controllers, that are respectively operatively connected to the first and second laser unit, wherein the frequency control units are configured to change the frequency of the lasers by a change of voltage that is supplied to the frequency control units.

In a further aspect the disclosure relates to a quantum communication network comprising a Bell state measurement system and a system according to any one foregoing embodiments.

In a further aspect the disclosure relates to a computer program configured to execute the method steps according to any one of the foregoing embodiments.

### Detailed description of exemplary embodiments

Reference will now be made in detail to exemplary embodiments, examples of which are illustrated in the accompanying drawings, wherein like reference numerals refer to the like elements throughout. Exemplary embodiments are described below with reference to the figures.
Figure 1 shows an example of a quantum communication system comprising a system for matching frequencies.
Figure 2 shows an example of a system for matching frequencies.
Figure 3 shows an example of a graph with characteristics of the method according to the invention.
Figures 4A-D show examples of graphs which illustrate the execution of the first algorithm.
Figure 5 shows an example of a method for matching frequencies.
Figure 6 shows an example of a method using the first algorithm.
Figure 7 shows an example of a method using the second algorithm.

### General

It is to be understood that the terminology used herein is for the purpose of describing particular embodiments only, and is not intended to be limiting, since the scope of the present disclosure will be determined by the appended claims.

Furthermore, unless defined otherwise, all technical and scientific terms used herein have the same meaning as commonly understood by one of ordinary skill in the art to which this invention belongs. Still, certain elements are defined below for the sake of clarity and ease of reference.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual exemplifying embodiments described and illustrated herein has discrete components and features which may be readily separated from or combined with the features of any of the other several exemplifying embodiments. Any recited method can be carried out in the order of events recited or in any other order which is logically possible.

### Detailed description

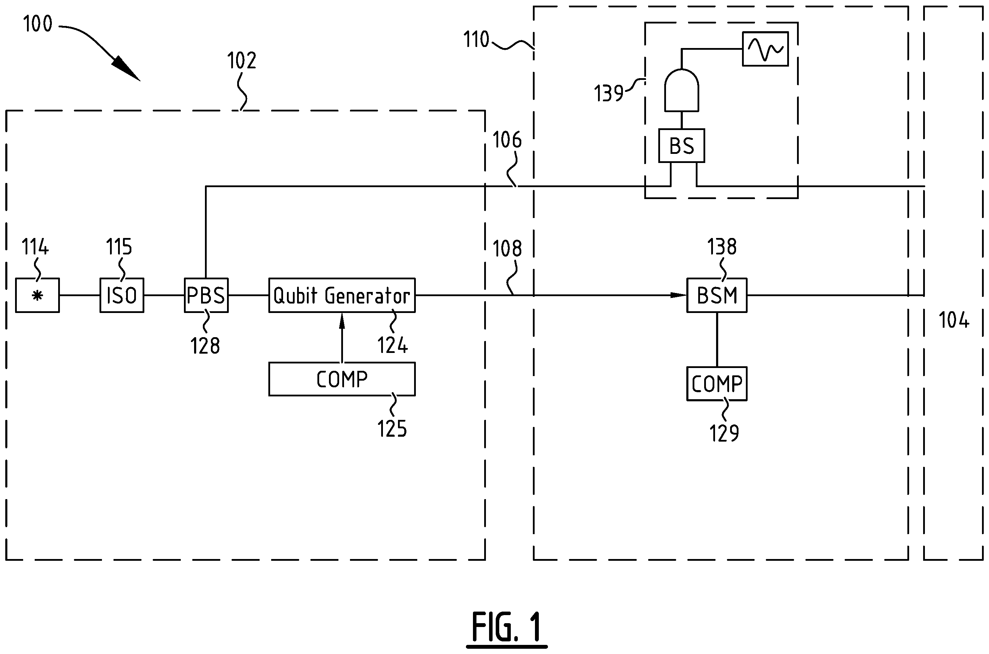

Figure 1 depicts an example of a quantum communication system for matching frequencies according to an embodiment of the disclosure. The system 100 comprises a first qubit module 102, a second qubit module 104 and a central node 110. First qubit module 102 comprises a laser unit 114, in the illustrated example a distributed feedback laser, for supplying a continuous light field. After the laser unit 114 an isolator 115 is positioned for stabilising the laser light. After the isolator the laser light is split by a polarizing beam splitter PBS 128. A first arm coming from PBS 128 goes through optical fibre 106 to frequency measurement device 139 for stabilizing the laser from the first and second qubit modules 102, 104. Frequency measurement device 139 also receives through optical fibre 107 laser light from second qubit module 104. A second arm coming from PBS 128 goes to a qubit generation device 124 that receives qubit state information from a field programmable gate array COMP 125. Qubit generation device 124 may for example comprise various intensity modulators, phase modulators, variable optical attenuators and/or isolators to obtain the desired properties for the qubits. The qubit made by qubit generation device 124 is then sent from first qubit module 102 over optical fibre 108 to central node 110. Although not illustrated in figure 1, second qubit module 104 comprises the same elements and features as described for first qubit module 102.

The qubit that is sent over optical fibre 108 is received at Bell state measurement (BSM) device 138, wherein a Bell state measurement can be performed on the qubit. This qubit information corresponding to the Bell state measurement is then sent to a local computer COMP 129 for the creation of a secret key.

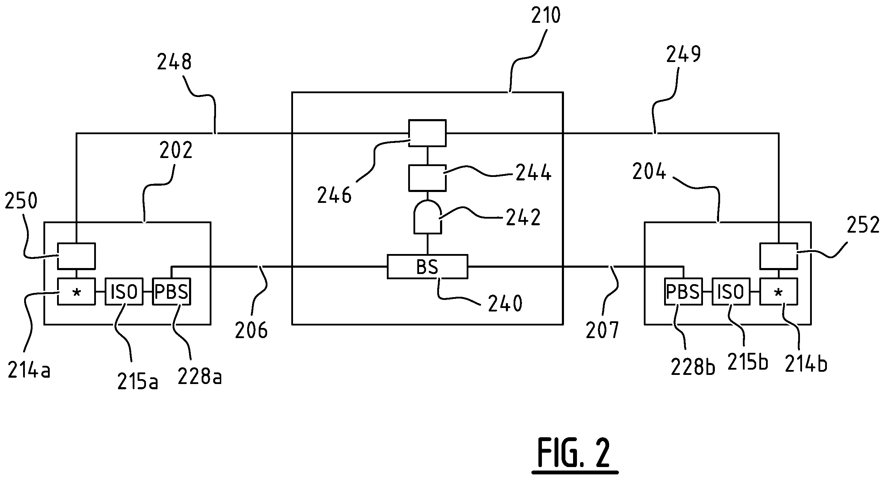

Figure 2 depicts a frequency measurement device 239 for stabilizing the frequencies from first and second qubit modules 202, 204. Frequency measurement device 239 comprises a beam splitter 240, a photodiode 242 and a frequency counter 244. The input for the beam splitter are laser light coming from first qubit module 202 through optical fibre 206 and laser light coming from second qubit module 204 through optical fibre 207. Photodiode 242 registers the incident photons and converts the number of photons to a voltage. As laser light from two sources are incident on the beam splitter 240, a beat signal having a beat frequency will be emitted by beam splitter 240. Frequency counter 244 is configured to determine from the output of the photodiode what the frequency of the beat signal is. Based on the signal generated by the frequency counter 244, controller 246 of frequency measurement device 239 sends a feedback signal to either first qubit module 202 or second qubit module 204 through communication channels 248 and 249. Communication channels 248 and 249 may be optical fibres, ethernet, or any other channel that is suitable to send a feedback signal. The feedback signal from communication channel248 is received at first qubit module 202 by frequency control unit 250. The feedback signal from communication channel249 is received at first qubit module 204 by frequency control unit 252. Frequency control units 250, 252 can in one embodiment be a temperature controller, wherein a temperature controller is configured to adapt the temperature of the lasers 214a, 214b such that the frequency of the laser is changed based on a voltage supplied to the temperature controller.

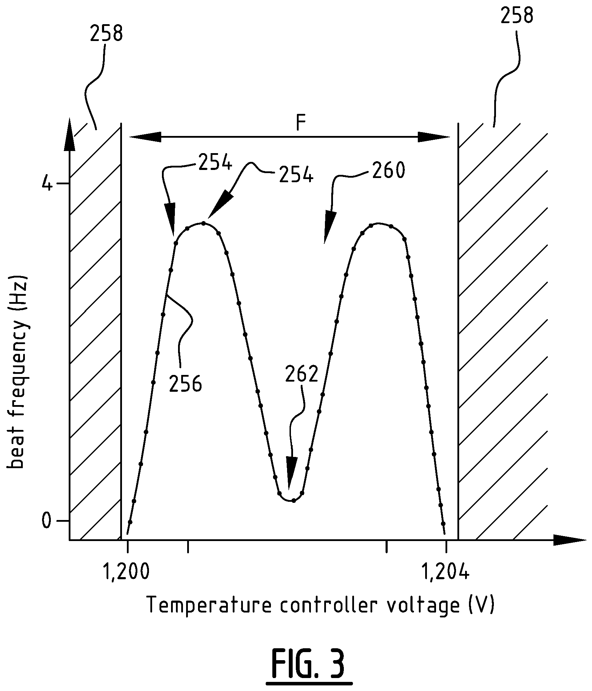

Figure 3 shows a graph of a voltage of the temperature controller against the beat frequency that is detected by frequency counter 244. More specifically, on the X-axis, the voltage supplied to a frequency control unit 250, in this example a temperature controller, is shown. This supplied voltage may be determined by the feedback signal that is sent through communication channel248. On the Y-axis the frequency that is obtained by frequency counter 244 and determined from the beat signal is shown.

Dots 254 are measurements of a beat frequency that is measured by frequency counter 244 at a specific voltage supplied to frequency control unit 250. Line 256 through dots 254 is the relation between the change of the voltage supplied to frequency control unit 250 and the beat frequency measured by frequency counter 244, under the condition that the voltage of the feedback signal supplied to frequency control unit 252 is held constant. In area 258 the frequency counter 244 does not measure a beat frequency. In predetermined frequency range F the frequency counter 244 measures a beat frequency. In the present example, the predetermined frequency range F is between 1.200 V and 1.204 V. It is clear for the skilled person that the predetermined frequency range is dependent on the specific set up of the system. The skilled person would understand that different lasers result in a different range of voltage for the predetermined frequency range F. Line 256 has a shape comprising a valley 260. At point 262 of valley 260 the beat frequency is substantially zero Hz, meaning that at a lowest point 262 the difference between the frequencies of laser 214a and laser 214b is substantially zero. It is an object for the present invention to determine the voltage of the feedback signal wherein the beat frequency is substantially zero, such that the frequencies of laser 214a and laser 214b are substantially the same. In area 258 a first algorithm may be executed. In predetermined frequency range F a second algorithm may be executed. In the context of the present disclosure, the first algorithm may be characterized as a broad search algorithm. The first and second algorithm may be executed by controller 246 of central node 210.

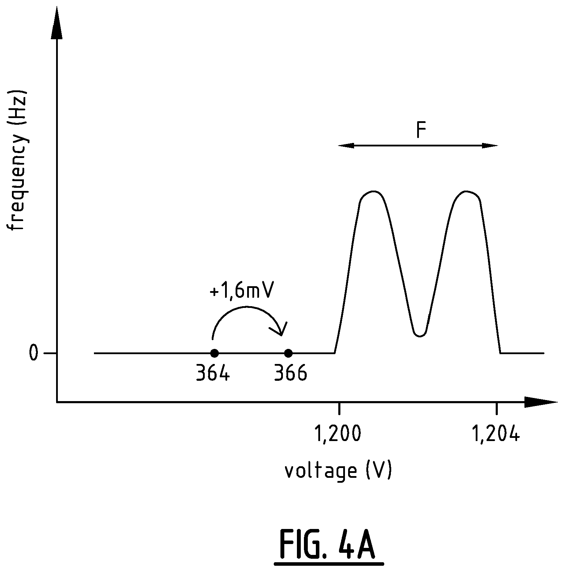

Figures 4A-D depicts various stages of the execution of the first algorithm. The voltage shown on the X-axis relates to the voltage of the feedback signal that is sent to frequency control unit 250 by controller 246. In all of the figures 4A-D the feedback signal sent to frequency control unit 252 of second qubit module 104 is kept constant. In figure 4A, the first algorithm starts with a voltage at point 364. At point 364, the voltage is outside the predetermined frequency range F, as at point 364 the voltage is lower than 1.200 V. In a first step, the first algorithm adds 1.6 mV to the voltage of the feedback signal sent to frequency control unit 250. This moves voltage from point 364 to point 366. As can be seen in figure 4A, point 366 is still outside the predetermined frequency range F.

The voltage difference added during the first step is at least partly determined by the predetermined frequency range F. In an embodiment, the first step may comprise a voltage difference that is less than half of the predetermined frequency range F. In an embodiment, the first step comprises a voltage difference that is less than half of the predetermined frequency range F and more than one quarter of the predetermined frequency range F.

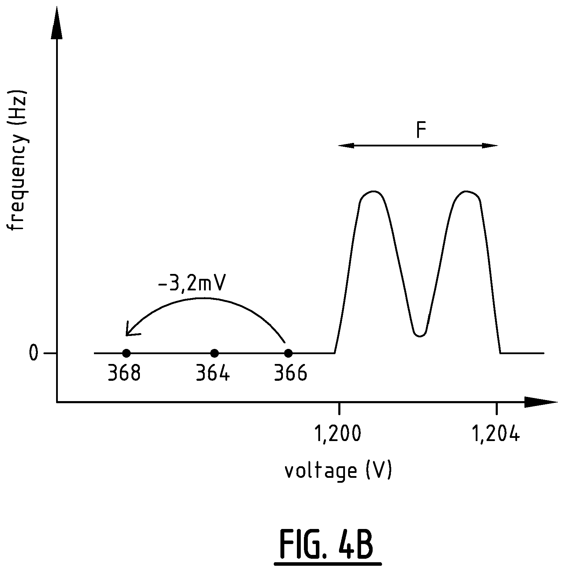

In figure 4B, the first algorithm has a voltage at point 366. At point 366, the voltage is outside the predetermined frequency range F, as at point 366 the voltage is lower than 1.200 V. In a second step, the first algorithm subtracts 3.2 mV to the voltage of the feedback signal sent to frequency control unit 250. This moves voltage from point 366 to point 368. As can be seen in figure 4B, point 368 is still outside the predetermined frequency range F.

In an embodiment, the second step comprises a voltage difference that is two times the voltage difference of the first step. In an embodiment, the sign of the voltage difference from the first step and the second step is different. In the present example, the sign of the first step is positive, while the sign of the second step is negative.

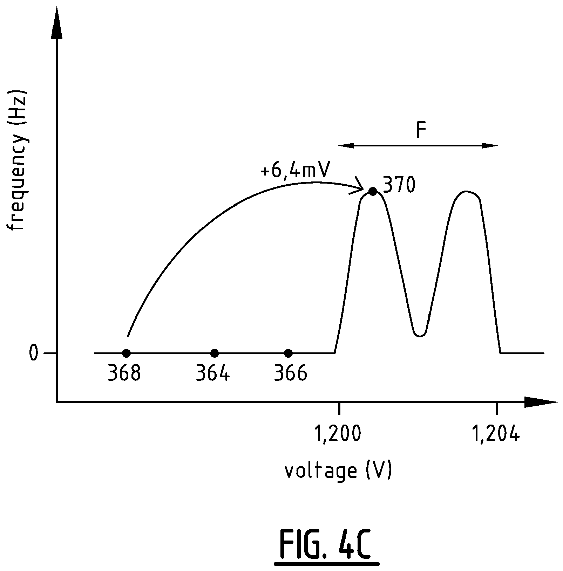

In figure 4C, the first algorithm has a voltage at point 368. At point 368, the voltage is outside the predetermined frequency range F, as at point 368 the voltage is lower than 1.200 V. In a third step, the first algorithm adds 6.4 mV to the voltage of the feedback signal sent to frequency control unit 250. This moves voltage from point 368 to point 370. As can be seen in figure 4C, point 370 is inside the predetermined frequency range F.

In an embodiment, the third step comprises a voltage difference that is three times the voltage difference of the first step. In an embodiment, the sign of the voltage difference from the second step and the third step is different. In the present example, the sign of the second step is negative, while the sign of the third step is positive.

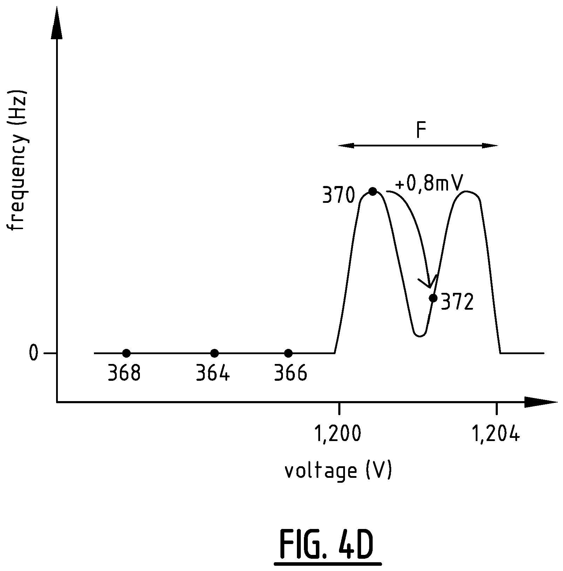

In figure 4D, the first algorithm has a voltage at point 370. At point 370, the voltage is inside the predetermined frequency range F, as at point 370 the voltage is in between 1.200 V and 1.204 V. In a fourth step, which may also be named the at least one further frequency step, the first algorithm adds 0.8 mV to the voltage of the feedback signal sent to frequency control unit 250. This moves voltage from point 370 to point 372. As can be seen in figure 4D, point 372 is also inside the predetermined frequency range F.

In an embodiment, the fourth step comprises a voltage difference that is half of the voltage difference of the first step. Controller 246 may determine to execute a fourth step wherein the voltage difference is half of the first step in case the preceding step brings the voltage in the predetermined frequency range F. In an embodiment, the sign of the voltage difference from the third step and the fourth step is the same. In the present example, the sign of the third step is positive, while the sign of the fourth step is positive.

After the fourth step, controller 246 may execute the second algorithm. In the context of the present disclosure, the second algorithm may be characterized as a gradient descent algorithm. The second algorithm is used to find a minimum of the beat frequency in the predetermined frequency range F.

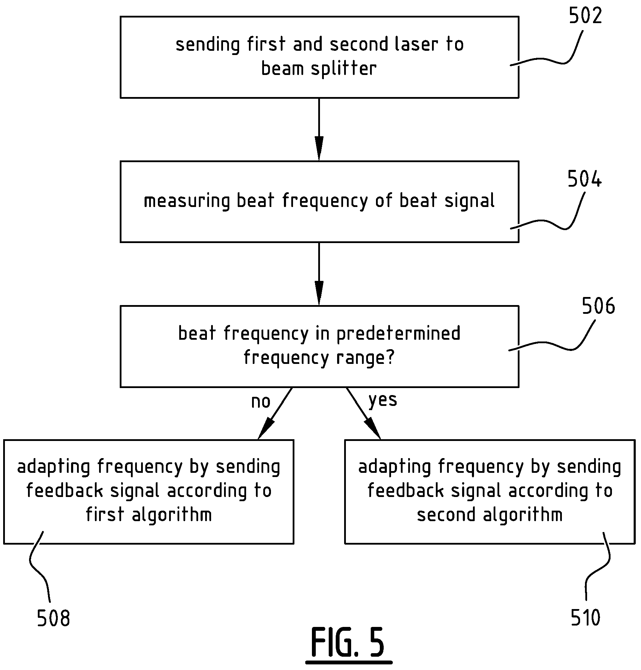

Figure 5 depicts an example of a method for matching frequencies. In step 502 the first and second laser unit 214a and 214b send their laser signal with a respective first frequency and second frequency to beam splitter 240 that is positioned at central node 210. In step 504 the beat frequency of the beat signal resulting from beam splitter 240 is measured by photodiode 242 and frequency counter 244. In step 506 controller 246 determines if the beat frequency is in a predetermined frequency range F. The predetermined frequency range F is the range of the beat frequency wherein the photodiode 242 and frequency counter 244 are able to determine a valid beat frequency. In other words, the predetermined frequency range F is the range of the beat frequency wherein the beat frequency is not too high to measure by the frequency counter 244. If the beat frequency is outside the predetermined frequency range F, controller 246 adapts the frequency according to a first algorithm in step 508. The first algorithm is executed by sending a feedback signal through communication channels 248 or 249. The first algorithm is configured to arrive at a beat frequency that is inside the predetermined frequency range F. If the beat frequency is inside the predetermined frequency range F, controller 246 adapts the frequency according to a second algorithm in step 510. The second algorithm is executed by sending a feedback signal through communication channels 248 or 249. The second algorithm is configured to find a minimum of the beat frequency.

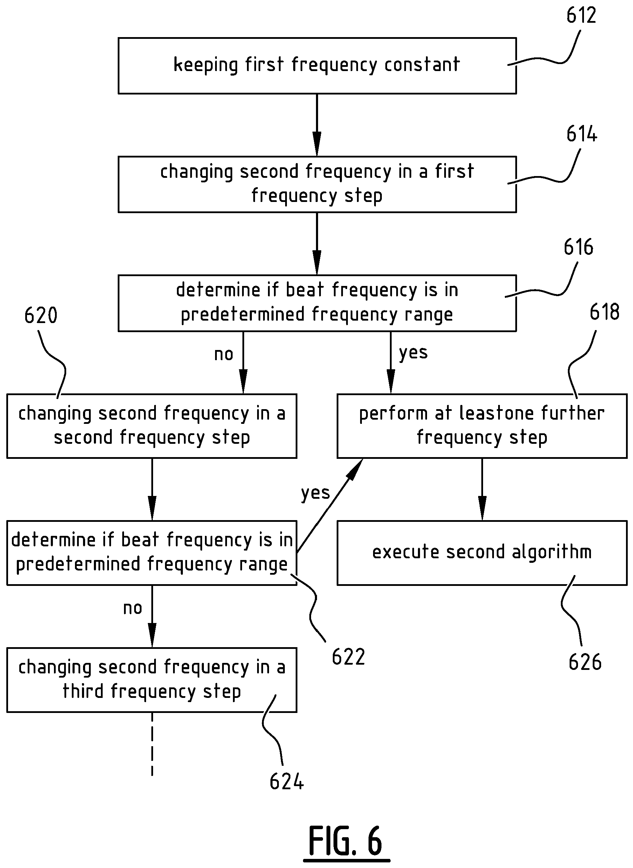

Figure 6 depicts an example of a method using the first algorithm. In step 612 the first frequency of first laser unit 214a is kept constant. This may be achieved by keeping the feedback signal sent through communication channel 248 constant. In step 614 the second frequency of second laser unit 214b may be changed in a first frequency step. The second frequency may be changed by controller 246 by changing a feedback signal through communication channel 249. The change of the feedback signal may be a changed voltage. The voltage change in the first frequency step may be determined by the voltage range wherein a valid measurement of the beat frequency can be determined. For example, the first voltage change in the first frequency step may be half of the predetermined frequency range F. The changed voltage instructs frequency control unit 252 to change the second frequency of second laser unit 241b. After the second frequency is changed by the feedback signal in the first frequency step, the beat frequency of the first frequency and the changed second frequency may be determined by photodiode 242 and frequency counter 244. In step 616 controller 246 may determine if the beat frequency of the first frequency and the changed second frequency is in the predetermined frequency range F. If the beat frequency is inside the predetermined frequency range F, controller 246 may perform one further frequency step in step 618.

If the beat frequency is outside the predetermined frequency range F, controller 246 may change the second frequency in a second frequency step in step 620. The voltage change of the second frequency step is in one embodiment twice as much as the voltage change in the first frequency step. The sign of the voltage change of the second frequency step is in one embodiment different than the sign of the voltage change of the first frequency step. For example, the first frequency step may comprise a voltage change of +2 mV, while the second frequency step may comprise a voltage change of -4 mV. After the second frequency is changed by the feedback signal in the second frequency step, the beat frequency of the first frequency and the changed second frequency may be determined by photodiode 242 and frequency counter 244. In step 622 controller 246 may determine if the beat frequency of the first frequency and the changed second frequency is in the predetermined frequency range F. If the beat frequency is inside the predetermined frequency range F, controller 246 may perform one further frequency step in step 618.

If the beat frequency is outside the predetermined frequency range F, controller 246 may change the second frequency in a third frequency step in step 624. The voltage change of the third frequency step in one embodiment has the voltage change of the first frequency step added to the voltage change in the second frequency step. In other words, the voltage change of the third frequency step is three times the voltage change of the first frequency step. The sign of the voltage change of the third frequency step is in one embodiment different than the sign of the voltage change of the second frequency step. For example, the second frequency step may comprise a voltage change of -4 mV, while the third frequency step may comprise a voltage change of +6 mV.

In step 618, the one further frequency step may comprise a voltage change that is half of the voltage change of the first frequency step. The sign of the voltage change of the one further frequency step is in one embodiment equal to the sign of the voltage change of the preceding frequency step. For example, if the preceding frequency step was a third frequency step with a voltage change of +6 mV, the further frequency step may comprise a voltage change of +1 mV. After performing one further frequency step the controller 246 may execute the second algorithm in step 626.

In an embodiment, when a frequency step is taken outside a valid frequency range of second laser unit 214b, controller 246 may change the feedback signals through communication channels249 and 248 by keeping the feedback signal to second laser unit 214b constant while changing the feedback signal to first laser unit 214a. A valid frequency range in the present disclosure denotes the workable range of frequencies of laser units 214a, 214b. In practice, the valid frequency range amounts to the frequencies between the minimum and maximum frequencies of laser units 214a, 214b.

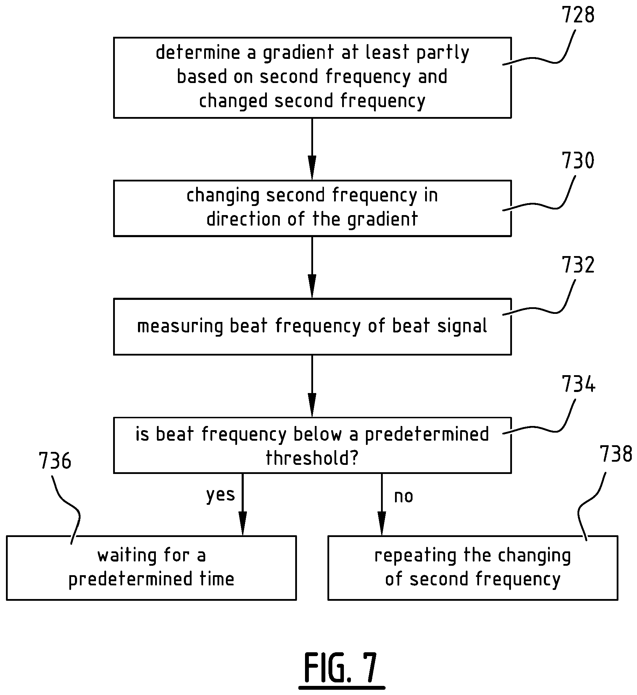

Figure 7 depicts an example of a method using the second algorithm. In step 728 controller 246 determines a gradient of the beat frequency at least partly based on the second frequency and the changed second frequency. In step 730 the second frequency is changed in the direction of the gradient. The changing of the second frequency may be executed by the controller 246 changing the voltage of the feedback signal. In step 732 the beat frequency of the beat signal of the first frequency and the changed second frequency is measured by photodiode 242 and frequency counter 244. In step 734 controller 246 may determine if the beat frequency that is measured in step 732 is below a predetermined threshold. The beat frequency being below the predetermined threshold means that the first frequency and second frequency are matched. In an embodiment, the beat frequency being below the predetermined threshold means that the first frequency and second frequency are substantially equal. If the beat frequency is below the predetermined threshold, in step 736 controller 246 may wait for a predetermined time for measuring the beat frequency between the first and second frequency. If the beat frequency is not below the predetermined threshold, in step 738 the controller 246 may repeat the changing of the second frequency of second laser unit 214b.

The present disclosure is by no means limited to the above described preferred embodiments thereof. The rights sought are defined by the following claims.

## Claims

1. Method for matching frequencies of lasers in a quantum communication system, comprising:
sending a first laser signal with a first frequency from a first device (202) at a first location and sending a second laser signal with a second device (204) at a second location to a beam splitter (240) located at a third location such that the two lasers signals interfere at the beam splitter to obtain a beat signal that has a beat frequency, wherein the beat frequency corresponds to the frequency difference between the first and second frequency;
measuring the beat frequency of the beat signal by a frequency detection unit (244) that is positioned at the third location;
determining if the beat frequency is in a predetermined frequency range; and sending a feedback signal from the third location to at least one of the first or second device;
adapting the first or second frequency by sending the feedback signal to at least one of the first or second device, wherein adapting the frequency is executed according to:
a first algorithm (508) as long as the beat frequency is outside the predetermined frequency range, wherein the first algorithm is configured to bring the beat frequency in the predetermined frequency range; and
a second algorithm (510) if the beat frequency is in the predetermined frequency to match the frequencies of the first and second laser signal.

2. Method according to claim 1, wherein executing the first algorithm comprises:
keeping the first frequency of the first laser signal constant;
changing the second frequency of the second laser signal by sending the feedback signal to the second device;
measuring the beat frequency of the beat signal based on the first frequency and the changed second frequency; and
repeating the changing of the changed second frequency of the second laser signal if the beat frequency is outside the predetermined frequency range;

3. Method according to claim 2, wherein changing the second frequency of the second laser signal comprises:
changing the second frequency in a step-like manner, wherein in a first frequency step a change of the frequency is based on the predetermined frequency range of the frequency detection unit, and wherein for each subsequent frequency step the change of the frequency is increased and a sign of the frequency step is flipped,
wherein optionally, the increasing of the change of the frequency in each subsequent frequency step comprises an addition of the change of the frequency of the first frequency step.

4. Method according to claim 2 or 3, wherein the method further comprises:
measuring, after each frequency step, the beat frequency of the beat signal; determining if the beat frequency is in the predetermined frequency range; performing, if the beat frequency is in the predetermined frequency range, at least one further frequency step, wherein the at least one further frequency step comprises a change of the frequency that is smaller than the change of the frequency of the first frequency step and wherein the sign of the last frequency step is equal to the preceding frequency step; and
repeating, if the beat frequency is outside the predetermined frequency range, the changing of the second frequency of the second laser signal;
wherein, optionally, the change of the frequency of the at least one further frequency step is half of the change of the frequency of the first frequency step.

5. Method according to any one of the foregoing claims, wherein the second algorithm comprises:
keeping the first frequency of the first laser signal constant;
determining a gradient of the beat frequency at least partly based on the second frequency and the changed second frequency;
changing the second frequency of the second laser signal in the direction of the gradient of the beat frequency;
measuring the beat frequency of the beating signal;
waiting, if the beat frequency is below a predetermined threshold, for a predetermined time with determining if the beat frequency is in a predetermined frequency range; and repeating, if the beat frequency is above the predetermined threshold, the changing of the second frequency of the second laser signal;
wherein, optionally, the second algorithm comprises:
putting a lower bound on the change of the second frequency for preventing an undetectable frequency difference; and
putting an upper bound on the change of the second frequency for preventing that the beat signal moves outside of the predetermined frequency range of the frequency detection unit.

6. Method according to any one of the claims 2-5, wherein:
when during execution of the first algorithm the changing of the second frequency moves the second frequency outside a valid frequency range of the second laser signal, the first algorithm is performed with the second frequency being kept constant and the first frequency being changed.

7. Method according to any one of the claims 2-6, wherein the steps of changing the frequency of the second laser are executed by changing a voltage supplied to a laser signal frequency control unit, for example a temperature controller, that is configured to control the frequency of the laser signal output by the second laser.

8. System for matching frequencies of lasers in a quantum communication system, comprising:
a first laser unit (214a) for emitting a first laser signal with a first frequency that is located at a first location;
a second laser unit (214b) for emitting a second laser signal with a second frequency that is located at a second location;
a beam splitter (240) that is located at a third location, wherein the first and second laser signals are configured to interfere on the beam splitter to obtain a beat signal with a beat frequency; and,
a frequency detection unit (244) for measuring the beat frequency of the beat signal, wherein the frequency detection unit is located at a third location and comprises a processor that is configured to:
- determine if the beat frequency is in a predetermined frequency range;
- send a feedback signal to at least one of the first or second laser unit;
- adapting the first or second frequency by sending the feedback signal to at least one of the first or second device, wherein adapting the frequency is executed according to:
- a first algorithm (508) as long as the beat frequency is outside the predetermined frequency range, wherein the first algorithm is configured to bring the beat frequency in the predetermined frequency range; and,
- a second algorithm (510) if the beat frequency is in the predetermined frequency range to match the frequencies of the first and second laser signal.

9. System according to claim 8, wherein executing the first algorithm further comprises: keeping the first frequency of the first laser signal constant;
changing the second frequency of the second laser signal by sending the feedback signal to the second laser unit;
measuring the beat frequency of the beat signal based on the first frequency and the changed second frequency; and
repeating the changing of the changed second frequency of the second laser signal if the beat frequency is outside the predetermined frequency range.

10. System according to claim 9, wherein the changing of the second frequency of the second laser signal comprises:
changing the second frequency in a step-like manner, wherein in a first frequency step a change of the frequency is based on the predetermined frequency range of the frequency detection unit, and wherein for each subsequent frequency step the change of the frequency is increased and a sign of the frequency step is flipped;
wherein, optionally, the increasing of the change of the frequency in each subsequent frequency step comprises an addition of the change of the frequency of the first frequency step.

11. System according to claim 9 or 10, wherein the first algorithm further comprises:
measuring, after each frequency step, the beat frequency of the beat signal; determining if the beat frequency is in the predetermined frequency range; performing, if the beat frequency is in the predetermined frequency range, at least one further frequency step, wherein the at least one further frequency step comprises a change of the frequency that is smaller than the change of the frequency of the first frequency step and wherein the sign of the last frequency step is equal to the preceding frequency step; and,
repeating, if the beat frequency is outside the predetermined frequency range, the changing of the second frequency of the second laser signal;
wherein, optionally, the change of the frequency of the at least one further frequency step is half of the change of the frequency of the first frequency step.

12. System according to any one of the claims 8 to 11, wherein the second algorithm comprises:
keeping the first frequency of the first laser signal constant;
determining a gradient of the beat frequency at least partly based on the second frequency and the changed second frequency;
changing the second frequency of the second laser signal in the direction of a gradient of the beat frequency;
measuring the beat frequency of the beating signal;
waiting, if the beat frequency is below a predetermined threshold, for a predetermined time with determining if the beat frequency is in a predetermined frequency range; and repeating, if the beat frequency is above the predetermined threshold, the changing of the second frequency of the second laser signal;
wherein, optionally, the second algorithm comprises:
putting a lower bound on the change of the second frequency for preventing an undetectable frequency difference; and
putting an upper bound on the change of the second frequency for preventing that the beat signal moves outside of the predetermined frequency range of the frequency detection unit.

13. System according to any one of the claims 12-18,
wherein, when during execution of the first algorithm the changing of the second frequency moves the second frequency outside a valid frequency range of the second laser signal, the first algorithm is performed with the second frequency being kept constant and the first frequency being changed in a step-like manner; and/or,
wherein the system further comprises:
a first and second frequency control unit, for example temperature controllers, that are respectively operatively connected to the first and second laser unit, wherein the frequency control units are configured to change the frequency of the lasers by a change of voltage that is supplied to the frequency control units.

14. Quantum communication network comprising:
- a Bell state measurement system; and
a system according to any one of the claims 8 - 13.

15. Computer program comprising instructions which, when the program is executed by the system according to any one of claims 8-13, causes system to carry out the method according to any one of the claims 1 - 7.

## Patentansprüche

1. Verfahren zum Angleichen von Frequenzen von Lasern in einem Quantenkommunikationssystem, aufweisend:
Senden eines ersten Lasersignals mit einer ersten Frequenz von einer ersten Vorrichtung (202) an einem ersten Ort und Senden eines zweiten Lasersignals mit einer zweiten Vorrichtung (204) an einem zweiten Ort zu einem Strahlteiler (240), der sich an einem dritten Ort befindet, so dass die beiden Lasersignale am Strahlteiler interferieren, um ein Schwebungssignal zu erhalten, dass eine Schwebungsfrequenz hat, wobei die Schwebungsfrequenz der Frequenzdifferenz zwischen der ersten und der zweiten Frequenz entspricht;
Messen der Schwebungsfrequenz des Schwebungssignals durch eine Frequenzerfassungseinheit (244), die an dem dritten Ort positioniert ist;
Ermitteln, ob die Schwebungsfrequenz in einem vorbestimmten Frequenzbereich liegt; und Senden eines Rückkopplungssignals von dem dritten Ort an mindestens eine der ersten oder zweiten Vorrichtung;
Anpassen der ersten oder zweiten Frequenz durch Senden des Rückkopplungssignals an mindestens eine der ersten oder zweiten Vorrichtung, wobei das Anpassen der Frequenz ausgeführt wird gemäß:
einem ersten Algorithmus (508), solange die Schwebungsfrequenz außerhalb des vorbestimmten Frequenzbereichs liegt, wobei der erste Algorithmus so konfiguriert ist, dass er die Schwebungsfrequenz in den vorbestimmten Frequenzbereich bringt; und
einem zweiten Algorithmus (510), wenn die Schwebungsfrequenz innerhalb des vorbestimmten Frequenzbereichs liegt, um die Frequenzen des ersten und zweiten Lasersignals anzugleichen.

2. Verfahren nach Anspruch 1, wobei das Ausführen des ersten Algorithmus aufweist:
Konstanthalten der ersten Frequenz des ersten Lasersignals;
Ändern der zweiten Frequenz des zweiten Lasersignals durch Senden des Rückkopplungssignals an die zweite Vorrichtung;
Messen der Schwebungsfrequenz des Schwebungssignals basierend auf der ersten Frequenz und der geänderten zweiten Frequenz; und
Wiederholen des Änderns der geänderten zweiten Frequenz des zweiten Lasersignals, wenn die Schwebungsfrequenz außerhalb des vorbestimmten Frequenzbereichs liegt.

3. Verfahren nach Anspruch 2, wobei das Ändern der zweiten Frequenz des zweiten Lasersignals aufweist:
Schrittweises Ändern der zweiten Frequenz, wobei in einem ersten Frequenzschritt eine Änderung der Frequenz auf dem vorbestimmten Frequenzbereich der Frequenzerfassungseinheit basiert und wobei für jeden nachfolgenden Frequenzschritt die Änderung der Frequenz erhöht wird und ein Vorzeichen des Frequenzschritts umgekehrt wird,
wobei, optional, das Erhöhen der Änderung der Frequenz in jedem nachfolgenden Frequenzschritt ein Hinzufügen der Änderung der Frequenz des ersten Frequenzschritts aufweist.

4. Verfahren nach Anspruch 2 oder 3, wobei das Verfahren ferner aufweist:
Messen der Schwebungsfrequenz des Schwebungssignals nach jedem Frequenzschritt; Ermitteln, ob die Schwebungsfrequenz innerhalb des vorbestimmten Frequenzbereichs liegt; Durchführen mindestens eines weiteren Frequenzschritts, wenn die Schwebungsfrequenz innerhalb des vorbestimmten Frequenzbereichs liegt, wobei der mindestens eine weitere Frequenzschritt eine Änderung der Frequenz aufweist, die kleiner ist als die Änderung der Frequenz des ersten Frequenzschritts, und wobei das Vorzeichen des letzten Frequenzschritts gleich dem des vorhergehenden Frequenzschritts ist; und
Wiederholen des Änderns der zweiten Frequenz des zweiten Lasersignals, wenn die Schwebungsfrequenz außerhalb des vorbestimmten Frequenzbereichs liegt;
wobei, optional, die Änderung der Frequenz des mindestens einen weiteren Frequenzschritts die Hälfte der Änderung der Frequenz des ersten Frequenzschritts beträgt.

5. Verfahren nach einem der vorstehenden Ansprüche, wobei der zweite Algorithmus aufweist:
Konstanthalten der ersten Frequenz des ersten Lasersignals;
Ermitteln eines Gradienten der Schwebungsfrequenz zumindest teilweise auf der Grundlage der zweiten Frequenz und der geänderten zweiten Frequenz;
Ändern der zweiten Frequenz des zweiten Lasersignals in der Richtung des Gradienten der Schwebungsfrequenz;
Messen der Schwebungsfrequenz des Schwebungssignals;
Warten, wenn die Schwebungsfrequenz unter einem vorbestimmten Schwellenwert liegt, für eine vorbestimmte Zeit mit dem Ermitteln, ob die Schwebungsfrequenz in einem vorbestimmten Frequenzbereich liegt; und Wiederholen, wenn die Schwebungsfrequenz über dem vorbestimmten Schwellenwert liegt, des Änderns der zweiten Frequenz des zweiten Lasersignals;
wobei, optional, der zweite Algorithmus aufweist:
Setzen einer unteren Grenze für die Änderung der zweiten Frequenz, um eine nicht erfassbare Frequenzdifferenz zu verhindern; und
Setzen einer oberen Grenze für die Änderung der zweiten Frequenz, um zu verhindern, dass sich das Schwebungssignal aus dem vorbestimmten Frequenzbereich der Frequenzerfassungseinheit herausbewegt.

6. Verfahren nach einem der Ansprüche 2 bis 5, wobei:
wenn während der Ausführung des ersten Algorithmus das Ändern der zweiten Frequenz die zweite Frequenz aus einem gültigen Frequenzbereich des zweiten Lasersignals herausbewegt, der erste Algorithmus ausgeführt wird, wobei die zweite Frequenz konstant gehalten und die erste Frequenz geändert wird.

7. Verfahren nach einem der Ansprüche 2 bis 6, wobei die Schritte des Änderns der Frequenz des zweiten Lasers durch Ändern einer Spannung ausgeführt werden, die einer Lasersignalfrequenz-Steuereinheit, beispielsweise einem Temperaturregler, zugeführt wird, die so konfiguriert ist, dass sie die Frequenz des von dem zweiten Laser ausgegebenen Lasersignals steuert.

8. System zum Abgleichen von Frequenzen von Lasern in einem Quantenkommunikationssystem, aufweisend:
eine erste Lasereinheit (214a) zum Emittieren eines ersten Lasersignals mit einer ersten Frequenz, die sich an einem ersten Ort befindet;
eine zweite Lasereinheit (214b) zum Emittieren eines zweiten Lasersignals mit einer zweiten Frequenz, die sich an einem zweiten Ort befindet;
einen Strahlteiler (240), der sich an einem dritten Ort befindet, wobei das erste und das zweite Lasersignal so konfiguriert sind, dass sie an dem Strahlteiler interferieren, um ein Schwebungssignal mit einer Schwebungsfrequenz zu erhalten; und
eine Frequenzerfassungseinheit (244) zum Messen der Schwebungsfrequenz des Schwebungssignals, wobei sich die Frequenzerfassungseinheit an einem dritten Ort befindet und einen Prozessor aufweist, der konfiguriert ist, um:
- zu ermitteln, ob die Schwebungsfrequenz in einem vorbestimmten Frequenzbereich liegt;
- ein Rückkopplungssignal an mindestens eine der ersten oder zweiten Lasereinheit zu senden;
- die erste oder zweite Frequenz anzupassen durch Senden des Rückkopplungssignals an mindestens eine der ersten oder zweiten Vorrichtung, wobei das Anpassen der Frequenz ausgeführt wird gemäß:
- einem ersten Algorithmus (508), solange die Schwebungsfrequenz außerhalb des vorbestimmten Frequenzbereichs liegt, wobei der erste Algorithmus so konfiguriert ist, dass er die Schwebungsfrequenz in den vorbestimmten Frequenzbereich bringt; und
- einem zweiten Algorithmus (510), wenn die Schwebungsfrequenz innerhalb des vorbestimmten Frequenzbereichs liegt, um die Frequenzen des ersten und zweiten Lasersignals anzugleichen.

9. System gemäß Anspruch 8, wobei das Ausführen des ersten Algorithmus ferner aufweist: Konstanthalten der ersten Frequenz des ersten Lasersignals;
Ändern der zweiten Frequenz des zweiten Lasersignals durch Senden des Rückkopplungssignals an die zweite Lasereinheit;
Messen der Schwebungsfrequenz des Schwebungssignals basierend auf der ersten Frequenz und der geänderten zweiten Frequenz; und
Wiederholen des Änderns der geänderten zweiten Frequenz des zweiten Lasersignals, wenn die Schwebungsfrequenz außerhalb des vorbestimmten Frequenzbereichs liegt.

10. System nach Anspruch 9, wobei das Ändern der zweiten Frequenz des zweiten Lasersignals aufweist:
Schrittweises Ändern der zweiten Frequenz, wobei in einem ersten Frequenzschritt eine Änderung der Frequenz auf dem vorbestimmten Frequenzbereich der Frequenzerfassungseinheit basiert und wobei für jeden nachfolgenden Frequenzschritt die Änderung der Frequenz erhöht wird und ein Vorzeichen des Frequenzschritts umgekehrt wird;
wobei, optional, das Erhöhen der Änderung der Frequenz in jedem nachfolgenden Frequenzschritt ein Hinzufügen der Änderung der Frequenz des ersten Frequenzschritts aufweist.

11. System nach Anspruch 9 oder 10, wobei der erste Algorithmus ferner aufweist:
Messen der Schwebungsfrequenz des Schwebungssignals nach jedem Frequenzschritt; Ermitteln, ob die Schwebungsfrequenz innerhalb des vorbestimmten Frequenzbereichs liegt; Durchführen mindestens eines weiteren Frequenzschritts, wenn die Schwebungsfrequenz innerhalb des vorbestimmten Frequenzbereichs liegt, wobei der mindestens eine weitere Frequenzschritt eine Änderung der Frequenz aufweist, die kleiner ist als die Änderung der Frequenz des ersten Frequenzschritts, und wobei das Vorzeichen des letzten Frequenzschritts gleich dem des vorhergehenden Frequenzschritts ist; und
Wiederholen des Änderns der zweiten Frequenz des zweiten Lasersignals, wenn die Schwebungsfrequenz außerhalb des vorbestimmten Frequenzbereichs liegt;
wobei, optional, die Änderung der Frequenz des mindestens einen weiteren Frequenzschritts die Hälfte der Änderung der Frequenz des ersten Frequenzschritts beträgt.

12. System nach einem der Ansprüche 8 bis 11, wobei der zweite Algorithmus aufweist:
Konstanthalten der ersten Frequenz des ersten Lasersignals;
Ermitteln eines Gradienten der Schwebungsfrequenz zumindest teilweise auf der Grundlage der zweiten Frequenz und der geänderten zweiten Frequenz;
Ändern der zweiten Frequenz des zweiten Lasersignals in der Richtung eines Gradienten der Schwebungsfrequenz;
Messen der Schwebungsfrequenz des Schwebungssignals;
Warten, wenn die Schwebungsfrequenz unter einem vorbestimmten Schwellenwert liegt, für eine vorbestimmte Zeit mit dem Ermitteln, ob die Schwebungsfrequenz in einem vorbestimmten Frequenzbereich liegt; und Wiederholen, wenn die Schwebungsfrequenz über dem vorbestimmten Schwellenwert liegt, des Änderns der zweiten Frequenz des zweiten Lasersignals;
wobei, optional, der zweite Algorithmus aufweist:
Setzen einer unteren Grenze für die Änderung der zweiten Frequenz, um eine nicht erfassbare Frequenzdifferenz zu verhindern; und
Setzen einer oberen Grenze für die Änderung der zweiten Frequenz, um zu verhindern, dass sich das Schwebungssignal aus dem vorbestimmten Frequenzbereich der Frequenzerfassungseinheit herausbewegt.

13. System nach einem der Ansprüche 12 bis 18,
wobei, wenn während der Ausführung des ersten Algorithmus das Ändern der zweiten Frequenz die zweite Frequenz aus einem gültigen Frequenzbereich des zweiten Lasersignals herausbewegt, der erste Algorithmus ausgeführt wird, wobei die zweite Frequenz konstant gehalten wird und die erste Frequenz schrittweise geändert wird; und/oder
wobei das System ferner aufweist:
eine erste und eine zweite Frequenzsteuereinheit, beispielsweise Temperaturregler, die jeweils funktionsfähig mit der ersten und der zweiten Lasereinheit verbunden sind, wobei die Frequenzsteuereinheiten so konfiguriert sind, dass sie die Frequenz der Laser durch eine Änderung einer Spannung ändern, die den Frequenzsteuereinheiten zugeführt wird.

14. Quantenkommunikationsnetzwerk, aufweisend:
- ein Bell-Zustandsmesssystem; und
ein System gemäß einem der Ansprüche 8 bis 13.

15. Computerprogramm, das Anweisungen aufweist, die, wenn das Programm von dem System gemäß einem der Ansprüche 8 bis 13 ausgeführt wird, das System veranlassen, das Verfahren gemäß einem der Ansprüche 1 bis 7 auszuführen.

## Revendications

1. Procédé de mise en concordance de fréquences de lasers dans un système de communication quantique, comprenant :
l'envoi d'un premier signal laser doté d'une première fréquence à partir d'un premier dispositif (202) à un premier emplacement et l'envoi d'un deuxième signal laser avec un deuxième dispositif (204) à un deuxième emplacement vers un séparateur de faisceau (240) situé à un troisième emplacement de sorte que les deux signaux laser interfèrent au niveau du séparateur de faisceau pour obtenir un signal de battement qui possède une fréquence de battement, dans lequel la fréquence de battement correspond à la différence de fréquence entre la première et la deuxième fréquence ;
la mesure de la fréquence de battement du signal de battement par une unité de détection de fréquence (244) qui est positionnée au troisième emplacement ;
la détermination de si la fréquence de battement est dans une plage de fréquences prédéterminée ; et l'envoi d'un signal de rétroaction à partir du troisième emplacement vers au moins l'un parmi le premier ou le deuxième dispositif ;
l'adaptation de la première ou de la deuxième fréquence par l'envoi du signal de rétroaction vers au moins l'un parmi le premier ou le deuxième dispositif, dans lequel l'adaptation de la fréquence est exécutée selon :
un premier algorithme (508) tant que la fréquence de battement est en dehors de la plage de fréquences prédéterminée, dans lequel le premier algorithme est configuré pour amener la fréquence de battement dans la plage de fréquences prédéterminée ; et
un deuxième algorithme (510) si la fréquence de battement est dans la fréquence prédéterminée pour mettre en concordance les fréquences du premier et du deuxième signal laser.

2. Procédé selon la revendication 1, dans lequel l'exécution du premier algorithme comprend :
le maintien de la première fréquence du premier signal laser constante ;
la modification de la deuxième fréquence du deuxième signal laser par l'envoi du signal de rétroaction vers le deuxième dispositif ;
la mesure de la fréquence de battement du signal de battement sur la base de la première fréquence et de la deuxième fréquence modifiée ; et
la répétition de la modification de la deuxième fréquence modifiée du deuxième signal laser si la fréquence de battement est en dehors de la plage de fréquences prédéterminée ;

3. Procédé selon la revendication 2, dans lequel la modification de la deuxième fréquence du deuxième signal laser comprend :
la modification de la deuxième fréquence d'une manière par pas, dans lequel, dans un premier pas de fréquence, une modification de la fréquence est basée sur la plage de fréquences prédéterminée de l'unité de détection de fréquence, et dans lequel, pour chaque pas de fréquence ultérieur, la modification de la fréquence est augmentée et un signe du pas de fréquence est inversé,
dans lequel facultativement, l'augmentation de la modification de la fréquence dans chaque pas de fréquence ultérieur comprend un ajout de la modification de la fréquence du premier pas de fréquence.

4. Procédé selon la revendication 2 ou 3, dans lequel le procédé comprend en outre :
la mesure, après chaque pas de fréquence, de la fréquence de battement du signal de battement ; la détermination de si la fréquence de battement est dans la plage de fréquences prédéterminée ; la réalisation, si la fréquence de battement est dans la plage de fréquences prédéterminée, d'au moins un pas de fréquence supplémentaire, dans lequel l'au moins un pas de fréquence supplémentaire comprend une modification de la fréquence qui est inférieure à la modification de la fréquence du premier pas de fréquence et dans lequel le signe du dernier pas de fréquence est égal au pas de fréquence précédent ; et
la répétition, si la fréquence de battement est en dehors de la plage de fréquences prédéterminée, de la modification de la deuxième fréquence du deuxième signal laser ;
dans lequel, facultativement, la modification de la fréquence de l'au moins un pas de fréquence supplémentaire est la moitié de la modification de la fréquence du premier pas de fréquence.

5. Procédé selon l'une quelconque des revendications précédentes, dans lequel le deuxième algorithme comprend :
le maintien de la première fréquence du premier signal laser constante ;
la détermination d'un gradient de la fréquence de battement au moins en partie sur la base de la deuxième fréquence et de la deuxième fréquence modifiée ;
la modification de la deuxième fréquence du deuxième signal laser dans la direction du gradient de la fréquence de battement ;
la mesure de la fréquence de battement du signal de battement ;
l'attente, si la fréquence de battement est inférieure à un seuil prédéterminé, pendant un temps prédéterminé avec la détermination de si la fréquence de battement est dans une plage de fréquences prédéterminée ; et la répétition, si la fréquence de battement est supérieure au seuil prédéterminé, de la modification de la deuxième fréquence du deuxième signal laser ;
dans lequel, facultativement, le deuxième algorithme comprend :
la mise en place d'une limite inférieure sur la modification de la deuxième fréquence pour empêcher une différence de fréquence indétectable ; et
la mise en place d'une limite supérieure sur la modification de la deuxième fréquence pour empêcher que le signal de battement ne se déplace en dehors de la plage de fréquences prédéterminée de l'unité de détection de fréquence.

6. Procédé selon l'une quelconque des revendications 2 à 5, dans lequel :
lorsque, pendant l'exécution du premier algorithme, la modification de la deuxième fréquence déplace la deuxième fréquence en dehors d'une plage de fréquences valide du deuxième signal laser, le premier algorithme est réalisé avec la deuxième fréquence qui est maintenue constante et la première fréquence qui est modifiée.

7. Procédé selon l'une quelconque des revendications 2 à 6, dans lequel les étapes de modification de la fréquence du deuxième laser sont exécutées par la modification d'une tension alimentant une unité de régulation de fréquence de signal laser, par exemple un régulateur de température, qui est configurée pour réguler la fréquence du signal laser délivré en sortie par le deuxième laser.

8. Système de mise en concordance de fréquences de lasers dans un système de communication quantique, comprenant :
une première unité laser (214a) pour l'émission d'un premier signal laser doté d'une première fréquence qui est située à un premier emplacement ;
une deuxième unité laser (214b) pour l'émission d'un deuxième signal laser doté d'une deuxième fréquence qui est située à un deuxième emplacement ;
un séparateur de faisceau (240) qui est situé à un troisième emplacement, dans lequel les premier et deuxième signaux laser sont configurés pour interférer sur le séparateur de faisceau pour obtenir un signal de battement doté d'une fréquence de battement ; et,
une unité de détection de fréquence (244) pour la mesure de la fréquence de battement du signal de battement, dans lequel l'unité de détection de fréquence est située à un troisième emplacement et comprend un processeur qui est configuré pour :
- déterminer si la fréquence de battement est dans une plage de fréquences prédéterminée ;
- envoyer un signal de rétroaction vers au moins l'une parmi la première ou la deuxième unité laser ;
- l'adaptation de la première ou de la deuxième fréquence par l'envoi du signal de rétroaction vers au moins l'un parmi le premier ou le deuxième dispositif, dans lequel l'adaptation de la fréquence est exécutée selon :
- un premier algorithme (508) tant que la fréquence de battement est en dehors de la plage de fréquences prédéterminée, dans lequel le premier algorithme est configuré pour amener la fréquence de battement dans la plage de fréquences prédéterminée ; et
- un deuxième algorithme (510) si la fréquence de battement est dans la fréquence prédéterminée pour mettre en concordance les fréquences du premier et du deuxième signal laser.

9. Système selon la revendication 8, dans lequel l'exécution du premier algorithme comprend en outre : le maintien de la première fréquence du premier signal laser constante ;
la modification de la deuxième fréquence du deuxième signal laser par l'envoi du signal de rétroaction vers la deuxième unité laser ;
la mesure de la fréquence de battement du signal de battement sur la base de la première fréquence et de la deuxième fréquence modifiée ; et
la répétition de la modification de la deuxième fréquence modifiée du deuxième signal laser si la fréquence de battement est en dehors de la plage de fréquences prédéterminée.

10. Système selon la revendication 9, dans lequel la modification de la deuxième fréquence du deuxième signal laser comprend :
la modification de la deuxième fréquence d'une manière par pas, dans lequel, dans un premier pas de fréquence, une modification de la fréquence est basée sur la plage de fréquences prédéterminée de l'unité de détection de fréquence, et dans lequel, pour chaque pas de fréquence ultérieur, la modification de la fréquence est augmentée et un signe du pas de fréquence est inversé ;
dans lequel, facultativement, l'augmentation de la modification de la fréquence dans chaque pas de fréquence ultérieur comprend un ajout de la modification de la fréquence du premier pas de fréquence.

11. Système selon la revendication 9 ou 10, dans lequel le premier algorithme comprend en outre :
la mesure, après chaque pas de fréquence, de la fréquence de battement du signal de battement ; la détermination de si la fréquence de battement est dans la plage de fréquences prédéterminée ; la réalisation, si la fréquence de battement est dans la plage de fréquences prédéterminée, d'au moins un pas de fréquence supplémentaire, dans lequel l'au moins un pas de fréquence supplémentaire comprend une modification de la fréquence qui est inférieure à la modification de la fréquence du premier pas de fréquence et dans lequel le signe du dernier pas de fréquence est égal au pas de fréquence précédent ; et,
la répétition, si la fréquence de battement est en dehors de la plage de fréquences prédéterminée, de la modification de la deuxième fréquence du deuxième signal laser ;
dans lequel, facultativement, la modification de la fréquence de l'au moins un pas de fréquence supplémentaire est la moitié de la modification de la fréquence du premier pas de fréquence.

12. Système selon l'une quelconque des revendications 8 à 11, dans lequel le deuxième algorithme comprend :
le maintien de la première fréquence du premier signal laser constante ;
la détermination d'un gradient de la fréquence de battement au moins en partie sur la base de la deuxième fréquence et de la deuxième fréquence modifiée ;
la modification de la deuxième fréquence du deuxième signal laser dans la direction d'un gradient de la fréquence de battement ;
la mesure de la fréquence de battement du signal de battement ;
l'attente, si la fréquence de battement est inférieure à un seuil prédéterminé, pendant un temps prédéterminé avec la détermination de si la fréquence de battement est dans une plage de fréquences prédéterminée ; et la répétition, si la fréquence de battement est supérieure au seuil prédéterminé, de la modification de la deuxième fréquence du deuxième signal laser ;
dans lequel, facultativement, le deuxième algorithme comprend :
la mise en place d'une limite inférieure sur la modification de la deuxième fréquence pour empêcher une différence de fréquence indétectable ; et
la mise en place d'une limite supérieure sur la modification de la deuxième fréquence pour empêcher que le signal de battement ne se déplace en dehors de la plage de fréquences prédéterminée de l'unité de détection de fréquence.

13. Système selon l'une quelconque des revendications 12 à 18,
dans lequel, pendant l'exécution du premier algorithme, la modification de la deuxième fréquence déplace la deuxième fréquence en dehors d'une plage de fréquences valide du deuxième signal laser, le premier algorithme est réalisé avec la deuxième fréquence qui est maintenue constante et la première fréquence qui est modifiée d'une manière par pas ; et/ou,
dans lequel le système comprend en outre :
une première et une deuxième unité de régulation de fréquence, par exemple des régulateurs de température, qui sont respectivement connectées de manière opérationnelle à la première et à la deuxième unité laser, dans lequel les unités de régulation de fréquence sont configurées pour modifier la fréquence des lasers par une modification de la tension qui alimente les unités de régulation de fréquence.

14. Réseau de communication quantique comprenant :
- un système de mesure d'état de Bell ; et
un système selon l'une quelconque des revendications 8 à 13.

15. Programme d'ordinateur comprenant des instructions qui, lorsque le programme est exécuté par le système selon l'une quelconque des revendications 8 à 13, amènent le système à effectuer le procédé selon l'une quelconque des revendications 1 à 7.
